# EUROPEAN PATENT SPECIFICATION

(11) **EP 3 346 244 B1**
(45) Date of publication and mention of the grant of the patent: **16.12.2020**
(21) Application number: 16841869.7
(22) Date of filing: 31.08.2016
(51) Int. Cl.: G01J 3/46, G06F 12/16, G06F 3/06, G06F 11/20, G06F 11/14

(54) **COLORIMETER, INFORMATION PROCESSING SYSTEM, AND DATA CONTROL METHOD**
FARBMESSER, INFORMATIONSVERARBEITUNGSSYSTEM UND DATENSTEUERUNGSVERFAHREN
COLORIMÈTRE, DISPOSITIF DE TRAITEMENT D'INFORMATIONS, ET PROCÉDÉ DE CONTRÔLE DES DONNÉES

(30) Priority: 03.09.2015 JP 2015173526
(43) Date of publication of application: 11.07.2018
(73) Proprietor: Konica Minolta, Inc., Tokyo 100-7015 (JP)
(72) Inventor: KINTO Yasuhisa, Tokyo 100-7015 (JP); YAMANOI Yuta, Tokyo 100-7015 (JP)
(74) Representative: Hoffmann Eitle
(86) International application number: PCT/JP2016/075382
(87) International publication number: WO 2017/038839

(56) References cited:
- EP-A1- 1 491 982
- JP-A- H0 962 587
- JP-A- 2011 178 166
- JP-A- 2012 209 786
- US-A1- 2008 162 797
- US-A1- 2008 250 172
- US-A1- 2009 112 101
- US-A1- 2012 096 451

## Description

### Technical Field

The present invention relates to a colorimeter measuring a color of an object, an information processing system allowing an external device to perform processing with respect to information obtained by the colorimeter, and a data control method using communication between the colorimeter and the external device.

### Background Art

In order to retain constant quality with respect to various industrial products or the like, for example, a hue of a front surface is retained to be the same between products. For this reason, the hue of the front surface is measured by a colorimeter or the like on any stage from the manufacturing to the shipment, and thus, the hue of the front surface is managed.

Such data relevant to the hue obtained by the colorimeter, for example, can be read out by an external device of a personal computer (hereinafter, simply referred to as a PC). At this time, connection between the PC and the colorimeter, for example, is realized according to general-purpose interface standard such as a universal serial bus (a USB) (for example, Patent Literature 1 or the like).

In addition, in the colorimeter, it is required that the colorimetry data is protected such that the data (also referred to as colorimetry data) obtained in colorimetry processing is not lost due to various factors, and thus, reliability as a meter is maintained. Therefore, for example, a technology is proposed in which two storage units are provided in the colorimeter, and the newest colorimetry data and data relevant to a colorimetry condition (also referred to as colorimetry condition data) are stored in one storage unit, and one previous colorimetry data and the colorimetry condition data are stored in the other storage unit (for example, Patent Literature 2 or the like). According to the technology, even in a case where the newest colorimetry data and the colorimetry condition data are lost due to an operation error or the like, the contents of one storage unit and the contents of the other storage unit are switched, and thus, it is possible to restore a data state before the operation error.

Then, for example, so-called mirroring processing is adopted in which replication of the data is stored in the other storage area different from one storage area in real time, with respect to the colorimetry data and the colorimetry condition data, and thus, the reliability of the colorimetry processing of the colorimeter can be improved.
Patent Literature 3 relates to an information processing system including a host device transmitting an order according to a USB standard and an information processing terminal responding to the order.
Patent Literature 4 relates to a USB storage device having the function of preventing stored software from being deleted by mistake achieved with as simple a structure as possible.
Patent Literature 5 relates to an improved memory card including an interface for receiving content from an appliance, a primary memory, a secondary memory, and primary controller. The primary controller is configured to selectively write the content only on the primary memory card, or only on the secondary memory card, or on both memories.
Patent Literature 6 relates to a system and processes for the accurate measurement and control of image color values on a printing press with or without the presence of a color bar.

### Citation List

### Patent Literature

Patent Literature 1: JP 2010-60525 A
Patent Literature 2: JP 9-62587 A
Patent Literature 3: US 2008/250172 A1
Patent Literature 4: EP 1 491 982 A1
Patent Literature 5: US 2008/162797 A1
Patent Literature 6: JP 2011 178166 A & EP-A-2 363 289

### Summary of Invention

### Technical Problem

However, in general control of communication (also referred to as USB communication) using a USB with respect to the external device, for example, mass storage control is included. Then, in order to save electric power of a processor in a portable colorimeter, a data processing speed is suppressed to be low, from the viewpoint of suppressing battery consumption. For this reason, the data processing speed of the colorimeter is obviously slower than a data processing speed of the PC.

Here, in a state where the mirroring processing is performed with respect to two storage units in the colorimeter, a case is assumed in which data edit such as delete and addition (also referred to as data edit) is executed with respect to the data stored in the storage unit according to the mass storage control of the USB communication, in a request from the PC. In this case, data is managed on the PC side. Specifically, for example, copy of a list of the data stored in the storage unit of the colorimeter is acquired in the PC, and the list is used, and thus, an operation relevant to the data edit can be performed on a screen (also referred to as a data manage screen) of a tool managing a file or a folder of the explorer. For this reason, operability relevant to the data edit is excellent.

However, the data processing speed of the processor in the colorimeter is slow, and a processing amount of the data increases according to the mirroring processing, and thus, significant time is required for the data processing. For this reason, for example, in a case where an operation relevant to the data edit is quickly performed on the data manage screen of the PC, a state relevant to the data edit in the colorimeter is not capable of following a state of the file displayed on the PC side. As a result thereof, a period is easily generated in which unconformity occurs between a storage state of the data displayed on the data manage screen of the PC, and a storage state of the data in the storage unit of the actual colorimeter. Accordingly, for example, reliability of the data in the storage unit of the colorimeter may be impaired due to various operations or the like of the colorimeter or the like during the period.

That is, it is difficult to make the reliability of the data obtained in the colorimeter and the operability relevant to the data edit of the colorimeter compatible.

The present invention is made in consideration of the problems described above, and an object of the present invention is to provide a technology in which it is possible to make the reliability of the data obtained in the colorimeter and the operability relevant to the data edit of the colorimeter compatible.

The invention is defined by the features laid down in the independent claims 1, 4 and 5. Further enhancements are provided by the dependent claims.

### Solution to Problem

In order to solve the problems described above, a colorimeter according to one aspect includes (a) a colorimetry unit, (b) a first storage unit, (c) a second storage unit, (d) a control unit, and (e) a communication unit. Here, the colorimetry unit performs colorimetry processing with respect to a target. The first storage unit stores data relevant to a colorimetry result of the colorimetry unit. The second storage unit stores data relevant to a colorimetry result of the colorimetry unit. When the colorimetry processing is performed by the colorimetry unit, the control unit stores the same colorimetry data indicating a color of the target which is obtained by the colorimetry processing of the colorimetry unit, in each of the first storage unit and the second storage unit. The communication unit performs data communication with respect to an external device. In addition, the control unit performs mirroring processing in which first data is stored in the second storage unit according to the presence of the first data which is stored in the first storage unit and is not stored in the second storage unit, and second data is stored in the first storage unit according to the presence of the second data which is not stored in the first storage unit and is stored in the second storage unit. The communication unit realizes each of data communication of a first method according to mass storage control and data communication of a second method according to serial communication control, with respect to the external device. Then, a state in which data is not deleted from the first storage unit and the data is stored in the first storage unit is maintained, with respect to a request of deleting the data stored in the first storage unit from the external device, according to the data communication of the first method. Data is deleted from the first storage unit, with respect to a request of deleting the data stored in the first storage unit from the external device, according to the data communication of the second method.

An information processing system according to another aspect includes (A) a colorimeter, and (B) an external device connected to the colorimeter such that data communication can be performed. Here, the colorimeter includes (A1) a colorimetry unit, (A2) a first storage unit, (A3) a second storage unit, (A4) a first control unit, and (A5) a first communication unit. The colorimetry unit performs colorimetry processing with respect to a target. The first storage unit stores data relevant to a colorimetry result of the colorimetry unit. The second storage unit stores data relevant to a colorimetry result of the colorimetry unit. When the colorimetry processing is performed by the colorimetry unit, the first control unit executes mirroring processing in which the same colorimetry data indicating a color of the target which is obtained by the colorimetry processing of the colorimetry unit is stored in each of the first storage unit and the second storage unit, first data is stored in the second storage unit according to the presence of the first data which is stored in the first storage unit and is not stored in the second storage unit, and second data is stored in the first storage unit according to the presence of the second data which is not stored in the first storage unit and is stored in the second storage unit. The first communication unit performs each of data communication of a first method according to mass storage control and data communication of a second method according to serial communication control, with respect to the external device. In addition, here, the external device includes (B1) a second communication unit, (B2) an input unit, and (B3) a second control unit. The second communication unit performs each of the data communication of the first method and the data communication of the second method, with respect to the colorimeter. The input unit inputs a signal according to an operation of a user. The second control unit acquires information indicating a storage state of data in the first storage unit from the colorimeter through the second communication unit according to the data communication of the first method, and visibly outputs the information on a display unit. Then, a state in which data is not deleted from the first storage unit and the data is stored in the first storage unit is maintained, with respect to a request of deleting the data stored in the first storage unit according to the data communication of the first method of the first and second communication units, according to the signal which is input by the input unit according to the operation of the user. In addition, data is deleted from the first storage unit, with respect to a request of deleting the data stored in the first storage unit according to the data communication of the second method of the first and second communication units, according to the signal which is input by the input unit according to the operation of the user.

A data control method according to still another aspect includes step (i), step (ii), step (iii), step (iv), and step (v). Here, in step (i) described above, colorimetry processing is performed with respect to a target by a colorimetry unit included in the colorimeter. In step (ii) described above, when the colorimetry processing is performed by the colorimetry unit of step (i) described above, a control unit included in the colorimeter stores the same colorimetry data indicating a color of the target which is obtained by the colorimetry processing of the colorimetry unit in each of a first storage unit and a second storage unit included in the colorimeter. In step (iii) described above, the control unit performs mirroring processing in which first data is stored in the second storage unit according to the presence of the first data which is stored in the first storage unit and is not stored in the second storage unit, and second data is stored in the first storage unit according to the presence of the second data which is not stored in the first storage unit and is stored in the second storage unit. In step (iv) described above, the colorimeter maintains a state in which data is not deleted from the first storage unit and the data is stored in the first storage unit is maintained, with respect to a request of deleting the data stored in the first storage unit from an external device connected to the colorimeter such that data communication can be performed, according to data communication of a first method of mass storage control. In step (v) described above, the colorimeter deletes data from the first storage unit, with respect to a request of deleting the data stored in the first storage unit from the external device, according to data communication of a second method of serial communication control.

### Advantageous Effects of Invention

According to the present invention, even in a case where there is a request of the data communication according to the mass storage control, the data is not deleted from the first storage unit, and the data is deleted from the first storage unit according to a request of the data communication according to the serial communication control. Accordingly, it is possible to make reliability of the data obtained by the colorimeter and operability relevant to the data edit of the colorimeter compatible.

### Brief Description of Drawings

Fig. 1 is a perspective view exemplifying an external appearance of a colorimetry system according to one embodiment.
Fig. 2 is a perspective view exemplifying the external appearance of the colorimetry system according to one embodiment.
Fig. 3 is a perspective view exemplifying the external appearance of the colorimetry system according to one embodiment.
Fig. 4 is a block diagram exemplifying a functional configuration of an information processing system.
Fig. 5 is a diagram for illustrating acquirement or the like of data in a colorimeter on a screen of a PC.
Fig. 6 is a diagram for illustrating the acquirement or the like of the data in the colorimeter on the screen of the PC.
Fig. 7 is a diagram for illustrating the acquirement or the like of the data in the colorimeter on the screen of the PC.
Fig. 8 is a diagram for illustrating the acquirement or the like of the data in the colorimeter on the screen of the PC.
Fig. 9 is a diagram for illustrating the acquirement or the like of the data in the colorimeter on the screen of the PC.
Fig. 10 is a diagram for illustrating the acquirement or the like of the data in the colorimeter on the screen of the PC.
Fig. 11 is a diagram for illustrating data edit in the colorimeter on the screen of the PC.
Fig. 12 is a flowchart illustrating an operation flow of the information processing system.
Fig. 13 is a flowchart illustrating the operation flow of the information processing system.

### Description of Embodiments

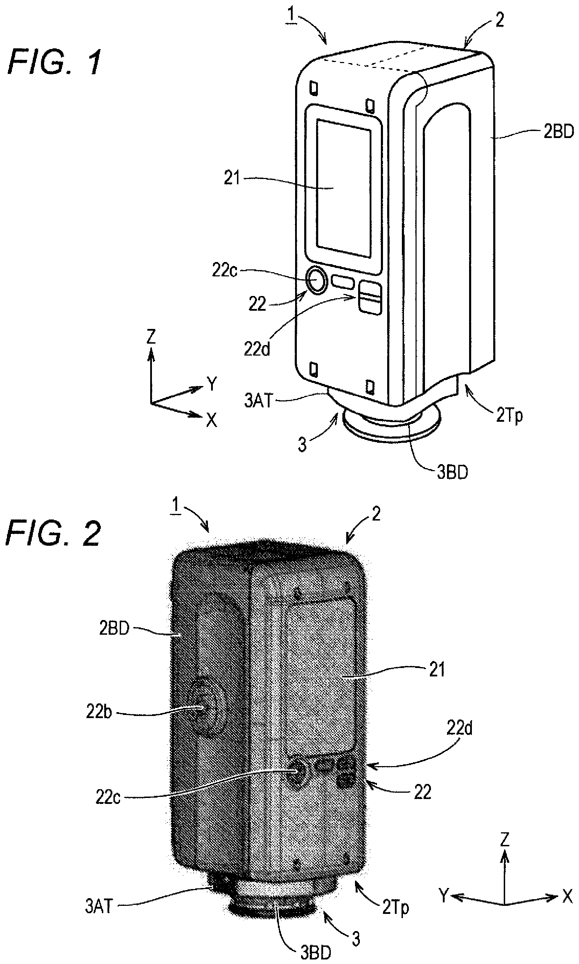

Hereinafter, one embodiment of the present invention and various modification examples will be described by using the drawings. In the drawings, the same reference numerals are applied to portions having similar configuration and function, and in the following description, the repeated description will be omitted. The drawings are schematically illustrated, and in each of the drawings, sizes, positional relationships, and the like of various structures can be suitably changed. In Fig. 1 to Fig. 3, an XYZ coordinate system of a right-handed system in which a longitudinal direction of a colorimetry system 1 (an upper direction in Fig. 1) is set to a +Z direction is applied.

### <(1) One Embodiment>

### <(1-1) Colorimetry System>

Fig. 1 to Fig. 3 are perspective views exemplifying an external appearance of a colorimetry system 1 according to one embodiment. The colorimetry system 1 is a comparatively small colorimetry system which is easily portable (also referred to as a portable colorimetry system). In the colorimetry system 1, for example, an object which is a target of colorimetry (also referred to as a colorimetry target) is irradiated with light, and at this time, light which is reflected or transmitted is dispersed and then is received in the colorimetry target, and thus, a color of the colorimetry target is calculated from reflectivity or transmissivity to be calculated with respect to each wavelength.

As illustrated in Fig. 1, the colorimetry system 1 includes a colorimeter 2, which is a main body portion, and a mask member 3 which is mounted on a tip end portion 2Tp of the colorimeter 2. In this embodiment, the colorimeter 2 is a portable colorimeter.

As illustrated in Fig. 1, the colorimeter 2 includes a housing portion 2BD, and an output unit 21 and an input unit 22 which are exposed to the outside on a front surface of the housing portion 2BD. The input unit 22 includes a power button 22a, a colorimetry button 22b, a standard button 22c, and a designation button group 22d.

The housing portion 2BD configures an approximately rectangular parallelepiped external portion of the colorimetry system 1, and for example, is configured of a non-magnetic material such as plastics. The housing portion 2BD includes an upper surface portion directed towards a +Z direction, a lower surface portion directed towards a -Z direction, a front portion directed towards a -Y direction, a rear portion directed towards a +Y direction, a first side portion directed towards a +X direction, and a second side portion directed towards a -X direction.

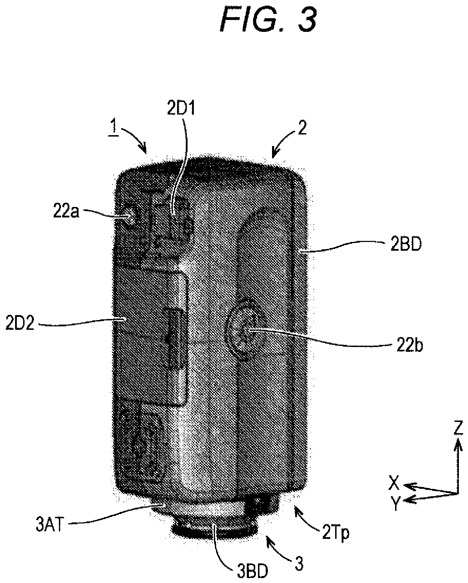

As illustrated in Fig. 1 and Fig. 2, the output unit 21, and the standard button 22c and the designation button group 22d are disposed on a front portion of the housing portion 2BD. In this embodiment, the output unit 21 includes a display unit which visibly outputs various characters, various images, and the like. As illustrated in Fig. 2 and Fig. 3, the colorimetry button 22b is disposed in the second side portion of the housing portion 2BD, and the power button 22a, a first lid portion 2D1, and a second lid portion 2D2 are disposed in the rear portion of the housing portion 2BD.

The power button 22a, for example, is a button for initiating supply of electric power with respect to the entire colorimeter 2 from a battery as power attached to colorimeter 2. The colorimetry button 22b, for example, is a button for initiating colorimetry processing with respect to a sample which is a standard (also referred to as a standard sample) and an evaluation target sample at the time of performing colorimetry processing of measuring an object color with respect to a sample which is one or more targets of evaluation (also referred to as an evaluation target sample). The colorimetry button 22b is an operation unit initiating the colorimetry processing with respect to the standard sample and the evaluation target sample. The standard button 22c is a button for setting the colorimetry processing of the standard sample. The designation button group 22d, for example, includes one or more buttons for designating various modes or various items. In Fig. 1 and Fig. 2, the designation button group 22d, for example, includes three buttons of an up button, a down button, and a determination button.

The first lid portion 2D1 and the second lid portion 2D2 are disposed in the housing portion 2BD to be openable and closable. Then, in a state where the first lid portion 2D1 is opened, a USB port disposed in the housing portion 2BD is in a state of being exposed to the outside, and in a state where the second lid portion 2D2 is opened, the battery attached to the housing portion 2BD to be detachable is in a state of being exposed to the outside.

The mask member 3 is a member which is mounted on the tip end portion 2Tp of the colorimeter 2 in order to cover the colorimetry unit 23, and is in contact with the colorimetry target when the colorimetry processing is performed with respect to the colorimetry target. The mask member 3 includes a main body portion 3BD and a mounting portion 3AT. The main body portion 3BD includes a window portion regulating the size of an area which is a target of the colorimetry processing in the colorimetry target (also referred to as a colorimetry target area). For example, a portion of which an XY sectional surface is approximately circular can be adopted as the window portion. Then, in a state where the mask member 3 is mounted on the tip end portion 2Tp of the colorimeter 2, the window portion is communicated with a window portion of the colorimetry unit 23 of the colorimeter 2. The mounting portion 3AT is a portion in which the mask member 3 is mounted on the colorimeter 2. Furthermore, the mask member 3, for example, will also be referred to as a target mask or the like. In addition, the mask member 3 has a configuration which can be mounted or detached with respect to the tip end portion 2Tp of the colorimeter 2.

### <(1-2) Information Processing System>

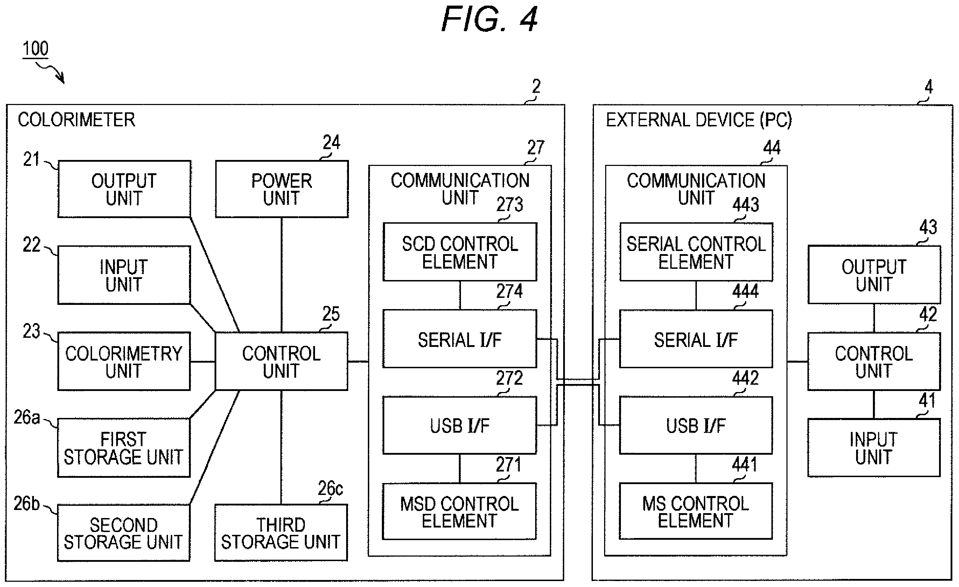

Fig. 4 is a block diagram exemplifying a functional configuration of an information processing system 100 according to this embodiment. As illustrated in Fig. 4, the information processing system 100 includes the colorimeter 2, and an external device 4 which is connected to the colorimeter 2 such that data communication can be performed.

The colorimeter 2 includes the output unit 21, the input unit 22, the colorimetry unit 23, a power unit 24, a control unit 25, first to third storage units 26a to 26c, and a communication unit 27 as a first communication unit.

The output unit 21 outputs various information items such that a user is capable of recognizing the information. Specifically, the output unit 21, for example, is capable of including a display unit visibly outputting various characters, various images, or the like, a speaker audibly outputting various information items, and the like. In the display unit, for example, information indicating the presence of the data stored in the first storage unit 26a can be visibly output.

The input unit 22 inputs a signal according to an operation of the user into the control unit 25. For example, the input unit 22 includes the power button 22a, the colorimetry button 22b, the standard button 22c, the designation button group 22d, and the like. The functions of such buttons, for example, may be realized by a touch panel which is integrally configured with the display unit as the output unit 21, and the like. In addition, the function of each of the buttons, for example, may be realized by a sound recognition unit or the like into which a signal according to sound is input in response to the sound generated by the user.

The colorimetry unit 23 performs the colorimetry processing of measuring a color of the colorimetry target. The colorimetry unit 23 includes an illumination unit emitting light according to the control of the control unit 25, and a sensor unit acquiring an electric signal according to the intensity of the received light. For example, the colorimetry target is irradiated with the light emitted from the illumination unit through the window portion of the colorimeter 2 and the mask member 3, and at this time, the light emitted from the colorimetry target is received by the sensor unit, and thus, an electric signal according to the intensity of the tight can be acquired. For example, a sensor in which tristimulus values of XYZ can be directly obtained, a sensor in which a spectral spectrum can be obtained from light dispersed by diffractive grating or a linear variable filter (LVF), and the like can be adopted as the sensor unit. Furthermore, here, in a case where the light emitted from the illumination unit is white light, the electric signal acquired by the colorimetry unit 23 is in accordance with the object color of the colorimetry target.

The power unit 24 is a portion supplying electric power to the entire colorimeter 2. Here, for example, the battery attached to the colorimeter 2, or the like can be adopted as the power unit 24. Furthermore, the power unit 24 supplies electric power to the entire colorimeter 2 according to a signal output in response to the press of the power button 22a.

The control unit 25 performs various controls and calculations for realizing various operations and various functions of the colorimeter 2. The control unit 25, for example, is configured by including a processor such as a CPU, a volatile memory such as a RAM, a non-volatile memory such as a ROM, and the like. The ROM, for example, stores a program, various data items, or the like. The CPU and the RAM, for example, read and execute the program or the like stored in the ROM, and thus, realize various operations and various functions of the colorimeter 2. Furthermore, in the control unit 25, for example, data relevant to a colorimetry result (also referred to as colorimetry data) indicating the color of the colorimetry target, referred to as the tristimulus values of XYZ, the spectral spectrum, and the like, can be acquired from the electric signal obtained by the colorimetry unit 23.

The first storage unit 26a, for example, is a main storage unit which is configured of a non-volatile memory or the like, and stores colorimetry data relevant to the colorimetry result of the colorimetry unit 23. For example, an NAND type memory or the like of which a reading and writing speed is not high, but storage capacity is large, can be adopted as the non-volatile memory. Here, for example, when communication according to mass storage control is performed between the colorimeter 2 and the external device 4, in the external device 4, a storage state of data stored in the first storage unit 26a can be browsed.

As with the first storage unit 26a, the second storage unit 26b, for example, is a storage unit for backup which is configured of a non-volatile memory or the like, and stores the colorimetry data relevant to the colorimetry result of the colorimetry unit 23. As with the first storage unit 26a, for example, an NAND type memory or the like of which a reading and writing speed is not high, but storage capacity is large, can be adopted as the non-volatile memory. Here, for example, the replica of the data which has been stored in the first storage unit 26a is stored in the second storage unit 26b, according to the control of the control unit 25. That is, processing in which the data stored in the first storage unit 26a is subjected to backup in the second storage unit 26b (also referred to as mirroring processing) is executed.

That is, here, by performing the mirroring processing, for example, when the colorimetry processing is performed by the colorimetry unit 23, the same colorimetry data indicating the color of the colorimetry target obtained in the colorimetry processing of the colorimetry unit 23 is stored in each of the first storage unit 26a and the second storage unit 26b by the control unit 25. In addition, by performing the mirroring processing, the data which is stored in the first storage unit 26a and is not stored in the second storage unit 26b (also referred to as first data) is stored in the second storage unit 26b, according to the presence of the first data. In addition, according to the mirroring processing, the data which is not stored in the first storage unit 26a and is stored in the second storage unit 26b (also referred to as second data) is stored in the first storage unit 26a, according to the presence of the second data. Furthermore, in the mirroring processing, for example, in a case where the data stored in one storage unit of the first storage unit 26a and the second storage unit 26b is corrupt, the data stored in the other storage unit, corresponding to the corrupt data may be copied into one storage unit.

The third storage unit 26c, for example, is configured of a volatile memory or the like, and temporarily stores the newest colorimetry data obtained by the control unit 25 according to the colorimetry processing of the colorimetry unit 23. Furthermore, even in a case where the third storage unit 26c is a volatile memory, the data stored in the third storage unit 26c can be retained for a certain period of time in a case where a battery for backup is adopted. In addition, here, for example, an SRAM memory or the like of which a reading and writing speed is high, but storage capacity is extremely small, can be adopted as the volatile memory.

The communication unit 27, for example, performs each of data communication of a first method according to mass storage control and data communication of a second method according to serial communication control, with respect to the external device 4. Such data communication of the first method and the second method, for example, is one type of USB communication. Furthermore, the data communication of the second method according to the serial communication control includes communication such as communication device class (CDC) class of USB communication and human interface device (HID) class of USB communication.

Here, the communication unit 27, for example, includes a mass storage device (MSD) control element 271, a USB interface (USB I/F) 272, a serial communication device (SCD) control element 273, and a serial interface (serial I/F) 274. The MSD control element 271 is an element for controlling the communication of the mass storage device class with respect to the external device 4 through the USB I/F 272. In addition, the SCD control element 273 is an element for controlling the communication of the serial communication with respect to the external device 4 through the serial I/F 274. Furthermore, here, the USB I/F 272 and the serial I/F 274 can be connected to each other by one USB cable for communication.

The external device 4 includes an input unit 41, a control unit 42 as a second control unit, an output unit 43, and communication unit 44 as a second communication unit.

The input unit 41 inputs the signal according to the operation of the user into the control unit 25. For example, the input unit 41 includes a keyboard, a mouse, or the like. The function of the input unit 41, for example, may be realized by a touch panel which is integrally configured with a display unit as the output unit 43. In addition, the function of the input unit 41, for example, may have a function of inputting the signal according to the sound in response to the sound generated by the user.

The control unit 42 acquires the information indicating the storage state of the data in the first storage unit 26a of the colorimeter 2 from the colorimeter 2 according to the data communication of the first method or the second method through the communication unit 44, and visibly outputs the information to the output unit 43.

As with the output unit 21, the output unit 43 outputs various information items such that the user is capable of recognizing the information. Specifically, the output unit 21, for example, is capable of including a display unit which visibly outputs various characters, various images, and the like, a speaker which audibly outputs various information items, and the like.

The communication unit 44 performs each of the data communication of the first method according to the mass storage control and the data communication of the second method according to the serial communication control, with respect to the colorimeter 2. Here, the communication unit 44, for example, includes a mass storage (MS) control element 441, a USB interface (I/F) 442, a serial control element 443, and a serial interface (I/F) 444. The MS control element 441 is an element for controlling the communication of the mass storage device class with respect to the colorimeter 2 through the USB I/F 442. In addition, the serial control element 443 is an element for controlling the communication of the serial communication with respect to the colorimeter 2 through the serial I/F 444. Furthermore, here, the USB I/F 442 and the serial I/F 444, and the USB I/F 272 and the serial I/F 274, for example, can be connected to the external device 4 by one USB cable for communication.

In the information processing system 100 according to this embodiment, having the configuration described above, the mirroring processing in which the colorimetry data obtained by the colorimetry processing is stored in the first storage unit 26a, and the replica of the colorimetry data is stored in the second storage unit 26b, is executed in the colorimeter 2.

Here, a case is assumed in which the edit of the data (also referred to as data edit) in the first storage unit 26a of the colorimeter 2 can be freely performed from the external device 4 according to the data communication of the first method of the mass storage control. The data edit includes deletion, addition, and the like with respect to the data stored in the first storage unit 26a. Then, for example, when a pressing method of the colorimeter 2 with respect to the colorimetry target at the time of performing the colorimetry processing is unsuitable, and thus, the colorimetry processing is not successful, when there is an error in the order of the colorimetry target, which is the target of the colorimetry processing, and when the storage capacity of the first storage unit 26a is planned to be ensured, it is necessary to delete the data.

In such a case, whenever the data edit is performed, it is necessary to perform the mirroring processing of matching the contents of the data between the first storage unit 26a and the second storage unit 26b. However, in the portable colorimeter 2, in order to save the electric power in the processor from the viewpoint of suppressing the battery consumption, a data processing speed is suppressed to be low, and a long period of time is required for the processing of the data edit. For this reason, for example, in a case where an operation relevant to the data edit is quickly performed on a screen managing a file or a folder of the explorer or the like (also referred to as a data manage screen) of the external device 4, a state relevant to the data edit in the colorimeter is not capable of following the state of the file displayed on the PC. As a result thereof, a period is easily generated in which unconformity occurs between an existence state of the data displayed on the data manage screen of the external device 4 and an existence state of the data in the first and second storage units 26a and 26b of the actual colorimeter 2. Accordingly, reliability of the data in the first storage unit 26a of the colorimeter 2 can be impaired.

On the other hand, in the data communication of the second method according to the serial control, in a case where a command is transmitted from the external device 4, and the processing is completed by the colorimeter 2 according to the command, a response indicating the effect is transmitted to the external device 4 from the colorimeter 2. For this reason, the unconformity hardly occurs in the recognition with respect to the existence state of the data between the external device 4 and the colorimeter 2, but it is necessary to wait for the completion of the data processing for a long period of time, and thus, operability is not excellent.

Therefore, in the information processing system 100 according to this embodiment, the data stored in the first storage unit 26a of the colorimeter 2 can be browsed and acquired according to the data communication of the first method of the mass storage control in the external device 4, with respect to the colorimeter 2, but the data edit is not capable of being performed. Accordingly, a certain degree of operability can be maintained. On the other hand, the data edit can be performed with respect to the data stored in the first storage unit 26a of the colorimeter 2 according to the data communication of the second method of the serial control in the external device 4, with respect to the colorimeter 2. Accordingly, the reliability of the data can be maintained.

Specifically, a state in which the data is not deleted from the first storage unit 26a and the data is stored in the first storage unit 26a is maintained, with respect to a request of deleting the data stored in the first storage unit 26a according to data communication of the first method of the communication units 27 and 44, according to the signal input by the input unit 41 according to the operation of the user. Such control, for example, can be realize by an aspect in which the MSD control element 271 ignores an instruction of deleting the data from the external device 4, according to the data communication of the first method of the mass storage control.

On the other hand, the data is deleted from the first storage unit 26a, with respect to a request of deleting the data stored in the first storage unit 26a according to the data communication of the second method of the communication units 27 and 44, according to the signal input by the input unit 41 according to the operation of the user. Such control, for example, can be realized by the SCD control element 273 which receives a command of deleting the data from the external device 4, according to the data communication of the second method of the serial communication control, and transmits a signal according to the command to the control unit 25.

That is, for example, even in a case where there is a request according to the data communication of the mass storage control, the data is not deleted from the first storage unit 26a, and the data is deleted from the first storage unit 26a according to the request according to the data communication of the serial communication control.

According to such a configuration, for example, the operation relevant to the data edit is not quickly performed on the data manage screen managing the file or the folder of the explorer or the like of the external device 4 by the mass storage control. For this reason, a problem hardly occurs in that the state relevant to the data edit of the colorimeter 2 does not follow the state of the file displayed on the screen of the external device 4. Accordingly, for example, the period in which the unconformity occurs between the storage state of the data in the first storage unit 26a which is displayed on the screen of the external device 4, and the storage state of the data in the first storage unit 26a of the actual colorimeter 2 is hardly generated. As a result thereof, the reliability of the data in the first storage unit 26a of the colorimeter 2 is hardly impaired.

On the other hand, in the serial control of the USB communication, in a case where the command is transmitted to the colorimeter 2 from the external device 4, and the processing is completed by the colorimeter 2 according to the command, the response indicating the effect is transmitted to the external device 4 from the colorimeter 2. For this reason, in a case where the data is deleted from the first storage unit 26a according to the request from the external device 4 according to the data communication of the serial communication control, the unconformity hardly occurs in the recognition with respect to the storage state of the data in the first storage unit 26a between the external device 4 and the colorimeter 2.

Therefore, in the information processing system 100 according to this embodiment, it is possible to make the reliability of the data obtained by the colorimeter 2 and the operability relevant to the data edit of the colorimeter 2 compatible.

In addition, a configuration may be adopted in which data is not written in the first storage unit 26a with respect to a request of writing the data in the first storage unit 26a from the external device 4 to the colorimeter 2, according to the data communication of the first method, but data is written in the first storage unit 26a with respect to a request of writing the data in the first storage unit 26a from the external device 4 to the colorimeter 2, according to the data communication of the second method. Furthermore, here, examples of the data to be a writing target include data indicating a color which is the standard of the colorimetry processing (also referred to as standard color data), measured or prepared in advance instead of the colorimetry data relevant to the standard sample, and the like.

In a case where such a configuration is adopted, the data is not written in the first storage unit 26a even in a case where there is a request according to the data communication of the mass storage control, but the data is written in the first storage unit 26a according to the request according to the data communication of the serial communication control. Accordingly, it is possible to make the reliability of the data obtained by the colorimeter 2 and the operability relevant to the data edit of the colorimeter 2 compatible.

Here, for example, the MSD control element 271 ignores an instruction of writing the data from the external device 4, according to the data communication of the first method of the mass storage control. On the other hand, for example, the SCD control element 273 receives a command of writing the data from the external device 4 according to the data communication of the second method of the serial communication control, and transmits a signal according to the command to the control unit 25.

However, the colorimeter 2, for example, may have a configuration in which a state where the data is not deleted from the first storage unit 26a and the data is stored in the first storage unit 26a is maintained with respect to the request of deleting the data stored in the first storage unit 26a, according to the signal input by the input unit 22. That is, in the colorimeter 2 itself, even in a case where the signal is input according to the operation of the user, the data is not deleted from the first storage unit 26a. For this reason, the deletion of the data in the colorimeter 2 is requested from the external device 4. As a result thereof, according to the configuration described above, it is possible to make the reliability of the data obtained by the colorimeter 2 and the operability relevant to the data edit of the colorimeter compatible.

### <(1-2-1) Specific Example of Browsing, Acquisition, and Edit of Data>

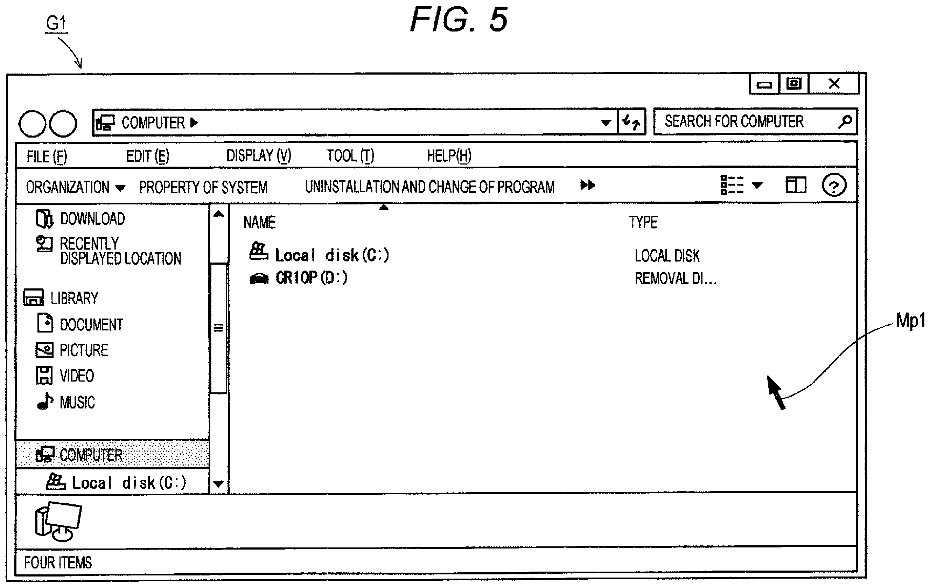

Fig. 5 to Fig. 10 are diagrams illustrating specific examples of an operation procedure according to browsing and acquisition of the data in the colorimeter 2 on the screen which is visibly output to the output unit 43 of the PC as the external device 4.

Here, in a case where the external device 4 and the colorimeter 2 are connected to each other by a USB cable, the colorimeter 2 is capable of performing communication of the mass storage control of the USB communication by the communication unit 27, and for example, the colorimeter 2 is recognized as a removable disk by the external device 4.

For example, in the external device 4, the signal is input from the input unit 41 according to the operation of the user, and thus, a data manage screen G1 (Fig. 5) of the tool managing the file or the folder of the explorer or the like is displayed on the output unit 43.

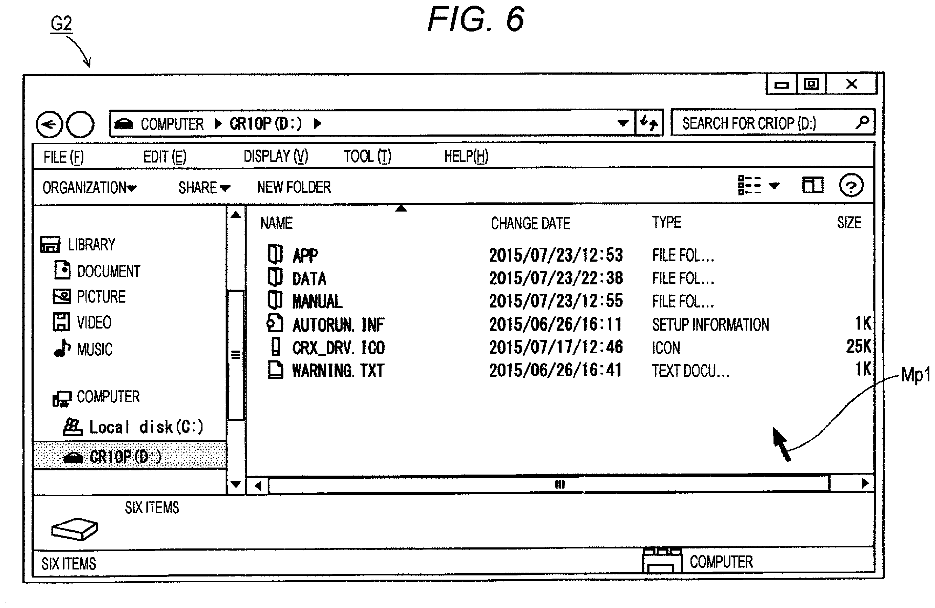

For example, in a case where the removable disk corresponding to the colorimeter 2 (here, CR10P of a D drive) is designated by a mouse pointer Mp1 according to an operation of the mouse of the user, on the data manage screen G1, the data manage screen G1 is transitioned to a data manage screen G2 (Fig. 6) indicating a list of folders stored in the first storage unit 26a of the colorimeter 2.

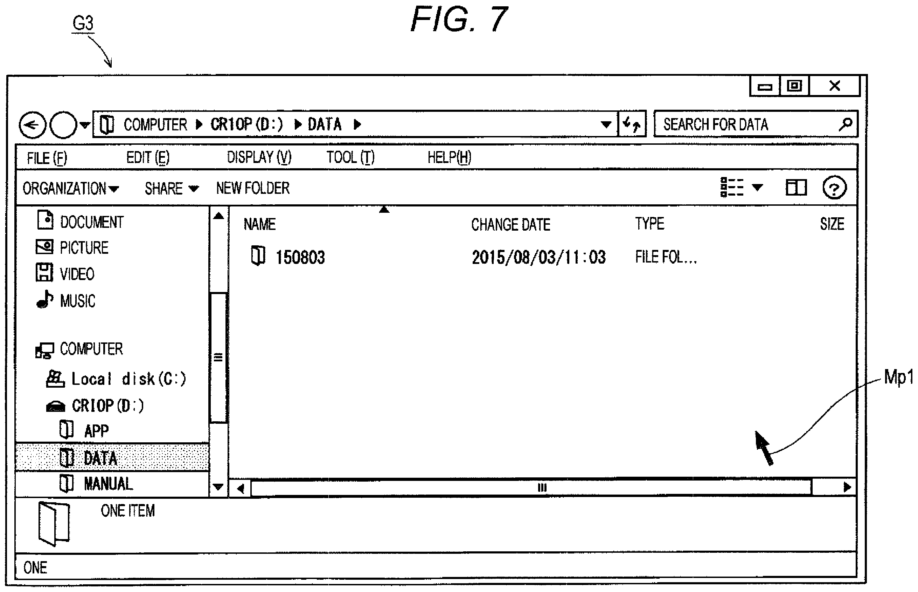

Next, for example, in a case where a folder where the colorimetry data is stored (here, DATA) is designated by the mouse pointer Mpl according to the operation of the mouse of the user, on the data manage screen G2, the data manage screen G2 is transitioned to a data manage screen G3 (Fig. 7) indicating a list of folders in which the colorimetry data is stored for each date.

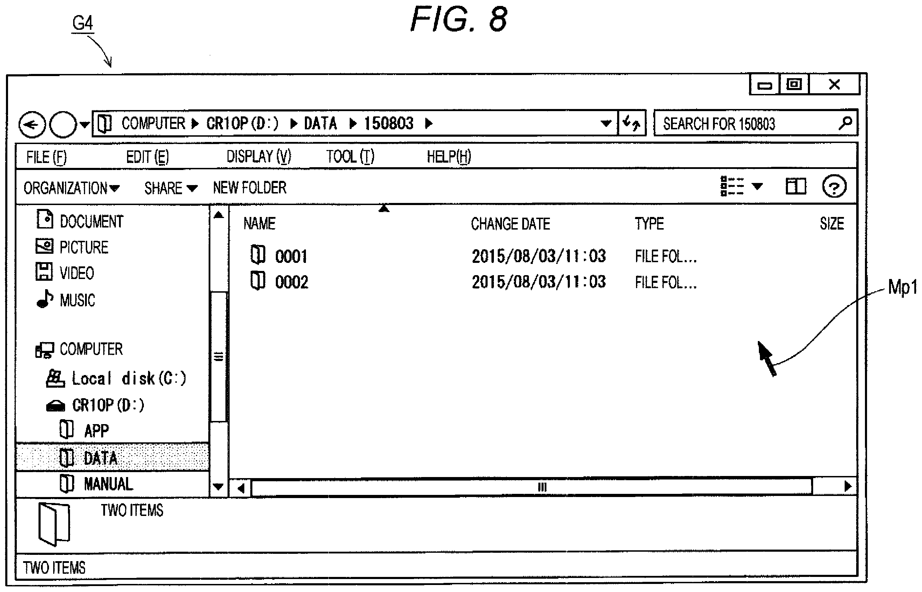

Next, for example, in a case where a folder in which the contents of the data is planned to be confirmed from the list of the folders for each date (in Fig. 7, 150803) is designated by the mouse pointer Mpl according to the operation of the mouse of the user, on the data manage screen G3, the data manage screen G3 is transitioned to a data manage screen G4 (Fig. 8) indicating a list of folders in which a set of colorimetry data items is stored. In Fig. 8, an aspect is illustrated in which a list of folders indicating two folders (0001 and 0002) is displayed. The set of colorimetry data items includes colorimetry data with respect to the standard sample which is the standard of the colorimetry processing (also referred to as standard colorimetry data) and colorimetry data with respect to the evaluation target sample which is an evaluation target using the standard sample as the standard (also referred to as evaluation colorimetry data). Furthermore, the evaluation colorimetry data with respect to the evaluation target sample, for example, may be data indicating a color difference using the value of the standard colorimetry data relevant to the standard sample as the standard (also referred to as color difference data).

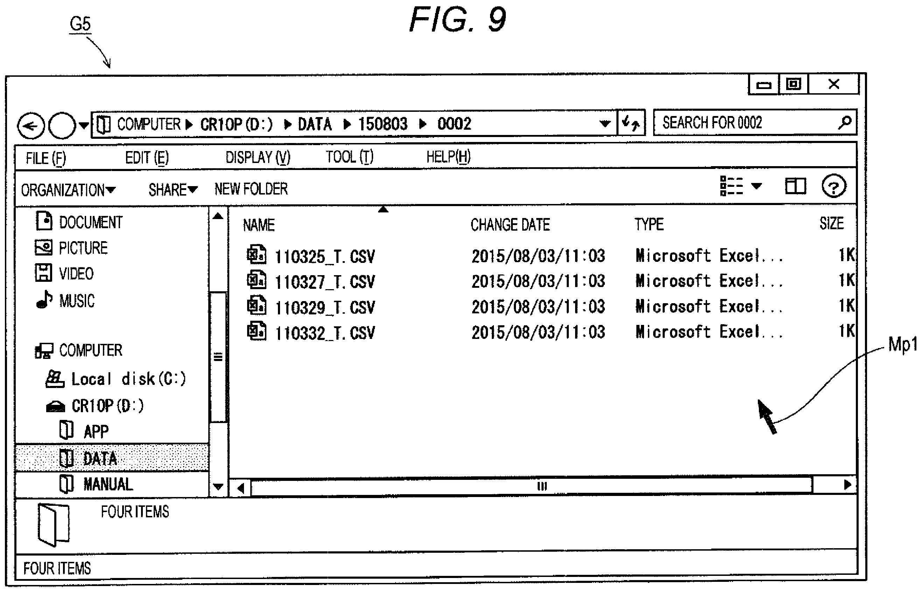

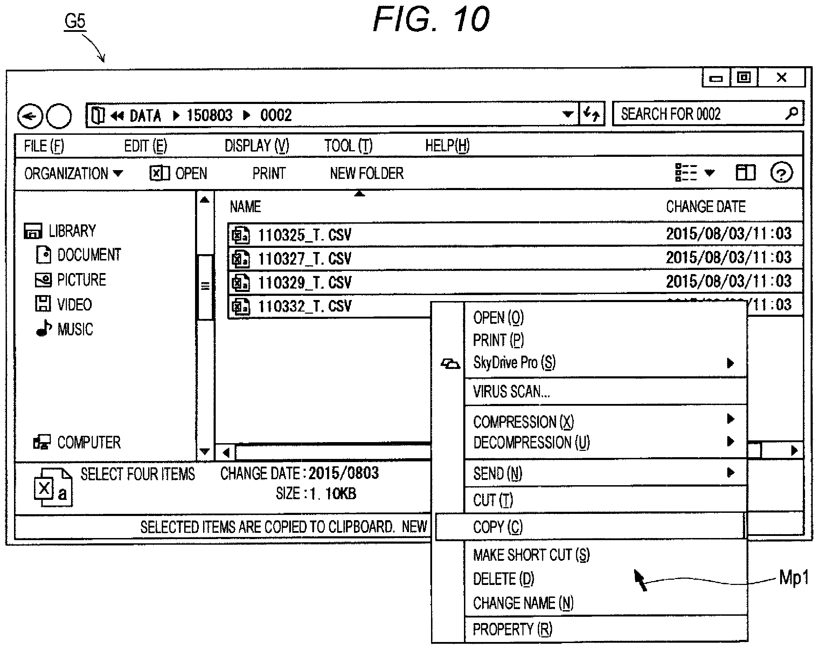

Next, for example, in a case where one folder (0001) is designated according to the operation of the mouse of the user, on the data manage screen G4, the data manage screen G4 is transitioned to a data manage screen G5 (Fig. 9) indicating a list of the standard colorimetry data and a plurality of evaluation colorimetry data items. In Fig. 9, an aspect is illustrated in which four files of one standard colorimetry data item (110325_T.CSV) and three evaluation colorimetry data items (110327_S.CSV, 110329_S.CSV, and 110332_S.CSV) are enumerated. In a plurality of files enumerated in Fig. 9, a desired file is designated by the mouse pointer Mpl, and thus, the contents of the data of the designated file can be displayed on the output unit 43. In addition, as illustrated in Fig. 10, in a case where a right button of the mouse is pressed in a state where the mouse pointer Mpl is matched with the desired file of the plurality of enumerated files, a list of a plurality of executable processings is displayed, desired processing is designated from the list. At this time, for example, in a case where a copy as one processing is designated, the designated desired file can be copied to the storage unit of the external device 4.

Thus, in the external device 4, the browsing and the acquisition of the data stored in the first storage unit 26a of the colorimeter 2 can be performed according to the data communication of the first method of the mass storage control with respect to the colorimeter 2, but the data edit is not capable of being performed.

In contrast, in the external device 4, the data edit of the data stored in the first storage unit 26a of the colorimeter 2 can be performed according to the data communication of the second method of the serial communication control with respect to the colorimeter 2. Here, an application prepared in advance is used in the external device 4 in a state where the external device 4 and the colorimeter 2 are connected to each other by a USB cable, and thus, the data communication of the second method of the serial communication control can be performed.

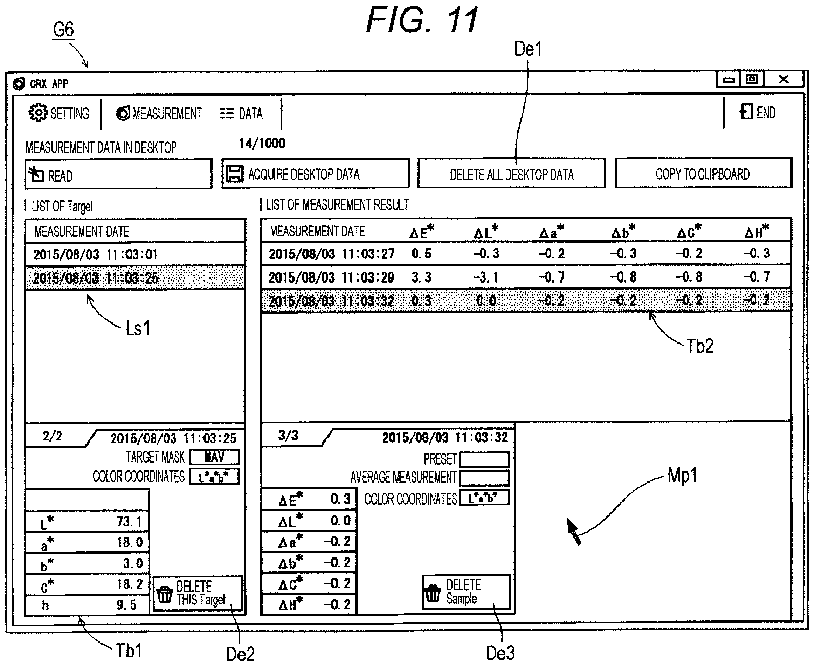

Fig. 11 is a screen (also referred to as a data edit screen) G6 of the application relevant to the edit of the data in the colorimeter 2 on the screen which is visibly output to the output unit 43 of the PC as the external device 4.

As illustrated in Fig. 11, for example, a list Lsl, a table Tb1, a table Tb2, and first to third delete buttons De1 to De3 are disposed on the data edit screen G6. The list Ls1 is a list for designating the set of colorimetry data items. The table Tb1 visibly represents the standard colorimetry data. The table Tb2 visibly represents the plurality of evaluation colorimetry data items with respect to a plurality of evaluation target samples. The plurality of evaluation colorimetry data items, for example, may be data (also referred to as color difference data) indicating a color difference using the value of the standard colorimetry data relevant to the standard sample as the standard.

The first delete button De1 is a button for deleting all data items stored in the first to third storage units 26a to 26c of the main body of the colorimeter 2. The second delete button De2 is a button for deleting the set of colorimetry data items designated by the list Lsl. The third delete button De3 is a button for deleting the desired evaluation colorimetry data designated by the table Tb2. A command relevant to deletion is transmitted to the colorimeter 2 by the data communication of the second method of the serial communication control, according to the press of the first to third delete buttons De1 to De3. At this time, in the colorimeter 2, the data is deleted from the first storage unit 26a according to the command relevant to deletion which has been transmitted. Then, the data is also deleted from the second storage unit 26b by the mirroring processing, as with the first storage unit 26a.

### <(1 -2-2) Countermeasure of Instantaneous Power Failure>

However, when the colorimetry data is stored in the colorimeter 2, for example, a problem occurs in that the colorimetry data is stored in the first storage unit 26a but is not stored in the second storage unit 26b in a case where the supply of the electric power is stopped in the colorimeter 2. The supply of the electric power in the colorimeter 2, for example, can be easily stopped due to a decrease in the output of the battery included in the power unit 24.

Therefore, as a countermeasure for preventing such a problem (also referred to as an instantaneous power failure countermeasure), in the colorimeter 2 according to this embodiment, when the colorimetry data is obtained by the colorimetry processing, first, the colorimetry data is stored in the third storage unit 26c of which a reading and writing speed of the colorimetry data is high. Then, after that, the colorimetry data stored in the third storage unit 26c is stored in the first and second storage units 26a and 26b.

In a case where such a configuration is adopted, first, the colorimetry data is not stored in any of the first to third storage units 26a to 26c in a case where the supply of the electric power from the power unit 24 is stopped before the colorimetry data is stored in the third storage unit 26c, and thus, the colorimetry processing fails.

Next, in a case where the supply of the electric power from the power unit 24 is stopped after the colorimetry data is stored in the third storage unit 26c and before the colorimetry data is stored in the first storage unit 26a, the storage of the colorimetry data in the first storage unit 26a, which is the main storage unit fails once. However, in such a case, the supply of the electric power from the power unit 24 is recovered, and then, the colorimetry data stored in the third storage unit 26c is stored in the first storage unit 26a and the second storage unit 26b, and thus, the storage of the colorimetry data also including the mirroring processing is realized. Furthermore, such storage of the colorimetry data can be realized by storing information indicating whether or not the colorimetry data is stored in each of the first and second storage units 26a and 26b, in the third storage unit 26c.

Further, in a case where the supply of the electric power from the power unit 24 is stopped after the colorimetry data is stored in the first and third storage units 26a and 26c and before the colorimetry data is stored in the second storage unit 26b, the storage of the colorimetry data in the second storage unit 26b, which is the storage unit for backup fails. That is, the mirroring processing is insufficient. However, in such a case, the supply of the electric power from the power unit 24 is recovered, and then, the colorimetry data stored in the first storage unit 26a or the third storage unit 26c is stored in the second storage unit 26b, and thus, the storage of the colorimetry data also including the mirroring processing is realized. Furthermore, such storage of the colorimetry data can be realized by storing information indicating whether or not the colorimetry data is stored in each of the first and second storage units 26a and 26b, in the third storage unit 26c.

### <(1-3) Operation Flow>

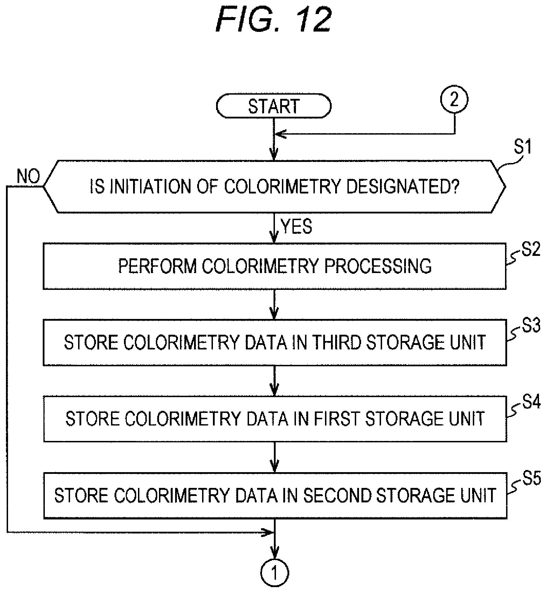

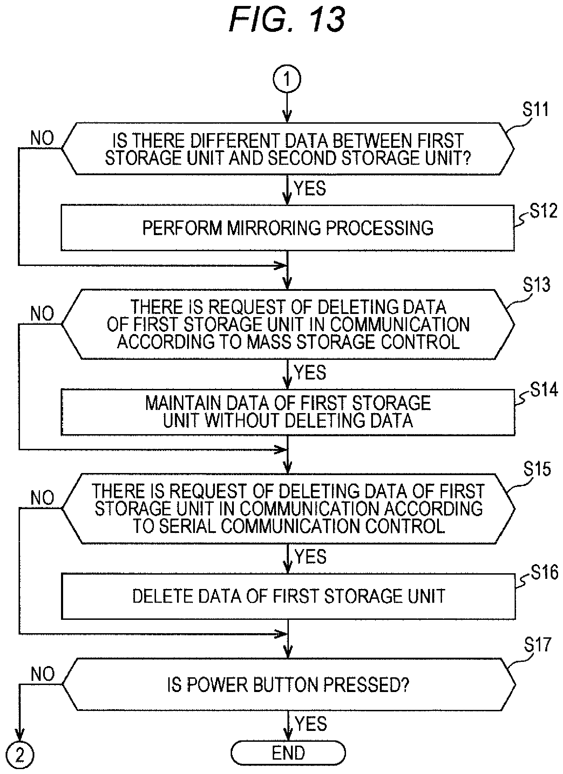

Fig. 12 and Fig. 13 are flowcharts exemplifying an operation flow according to the control of the data in the information processing system 100. In Fig. 12, an operation flow according to the storage of the colorimetry data acquired at the time of performing the colorimetry processing is exemplified, and in Fig. 13, an operation flow according to the mirroring processing and the edit of the data stored in the first storage unit 26a is exemplified.

The operation flows of Fig. 12 and Fig. 13, for example, are initiated by allowing the user to press the power button 22a, and by allowing the power unit 24 to supply electric power to the entire colorimeter 2. Furthermore, for example, the colorimeter 2 and the external device 4 are connected to each other by a USB cable such that suitable data communication can be performed, at an initiation time point or a time point in progress of the operation flow.

In step S1 of Fig. 12, whether or not the initiation of the colorimetry processing is designated by the signal from the input unit 22 according to the operation of the user, is determined by the control unit 25. Here, in a case where the initiation of the colorimetry processing is designated, the process proceeds to step S2, and in a case where the initiation of the colorimetry processing is not designated, the process proceeds to step S11 of Fig. 13.

In step S2, the colorimetry processing is performed with respect to the colorimetry target by the colorimetry unit 23 included in the colorimeter 2. At this time, the colorimetry data as the colorimetry result is obtained. In a case where the processing of step S2 is ended, the process proceeds to step S3.

In step S3, the colorimetry data obtained in step S2 is stored in the third storage unit 26c, and the process proceeds to step S4.

In step S4, the colorimetry data stored in the third storage unit 26c in step S3 is stored in the first storage unit 26a, and the process proceeds to step S5.

In step S5, the colorimetry data stored in the first storage unit 26a in step S4 is stored in the second storage unit 26b, and the process proceeds to step S11 of Fig. 13. Accordingly, when the colorimetry processing is performed by the colorimetry unit 23 in step S2, the same colorimetry data indicating the color of the colorimetry target obtained in the colorimetry processing of the colorimetry unit 23, is stored in each of the first storage unit 26a and the second storage unit 26b included in the colorimeter 2, by the control unit 25 included in the colorimeter 2.

In step S11 of Fig. 13, whether or not there is different data between the first storage unit 26a and the second storage unit 26b, is determined by the control unit 25. Here, in a case where there is different data, the process proceeds to step S12, and in a case where there is no different data, the process proceeds to step S13.

In step S12, the mirroring processing is performed according to the control of the control unit 25, and the process proceeds to step S13. That is, in steps S11 and S12, the control unit 25 stores the data which is stored in the first storage unit 26a and is not stored in the second storage unit 26b (also referred to as first data) in the second storage unit 26b, according to the presence of the first data. In addition, in steps S11 and S12, the control unit 25 stores the data which is stored in the second storage unit 26b and is not stored in the first storage unit 26a (also referred to as second data) in the first storage unit 26a, according to the presence of the second data.

In step S13, whether or not there is the request of deleting the data of the first storage unit 26a according to the communication of the first method of the mass storage control (also referred to as a data delete request) is determined by the MSD control element 271 of the communication unit 27. Here, in a case where there is the data delete request, the process proceeds to step S14, and in a case where there is no data delete request, the process proceeds to step S15.

In step S14, the data of the first storage unit 26a is not deleted but is maintained by the communication unit 27 and the control unit 25, and the process proceeds to step S15. That is, in the colorimeter 2, a state where the data is not deleted from the first storage unit 26a and the data is stored in the first storage unit 26a is maintained with respect to the request of deleting the data stored in the first storage unit 26a from the external device 4 which is connected to the colorimeter 2 such that the data communication can be performed, according to the data communication of the first method of the mass storage control.

In step S15, whether or not there is the request of deleting the data of the first storage unit 26a (also referred to as a data delete request) according to the data communication of the second method of the serial communication control, is determined by the SCD control element 273 of the communication unit 27. Here, in a case where there is the data delete request, the process proceeds to step S16, and in a case where there is no data delete request, the process proceeds to step S15.

In step S16, the data of the first storage unit 26a is deleted according to the data delete request by the control unit 25, and the process proceeds to step S17. That is, in the colorimeter 2, the data is deleted from the first storage unit 26a, with respect to the request of deleting the data stored in the first storage unit 26a from the external device 4, according to the data communication of the second method of the serial communication control.

In step S17, whether or not the power button 22a included in the input unit 22 is pressed is determined. Here, in a case where the power button 22a is not pressed, the process returns to step S1 of Fig. 12, and in a case where the power button 22a is pressed, this operation flow is ended.

### <(1-4) Conclusion of One Embodiment>

As described above, according to the information processing system 100 of this embodiment, in the colorimeter 2, even in a case where there is the request according to the data communication of the first method of the mass storage control, the data is not deleted from the first storage unit 26a, and the data is deleted from the first storage unit 26a according to the request according to the data communication of the serial communication control. Accordingly, it is possible to make the reliability of the data obtained by the colorimeter and the operability relevant to the data edit of the colorimeter compatible.

### <(2) Modification Example>

Furthermore, the present invention is not limited to one embodiment described above, but various changes, modifications, or the like can be performed within a range not departing from the gist of the present invention.

For example, in one embodiment described above, the colorimeter 2 acquires the standard colorimetry data relevant to the standard sample and the color difference data as the evaluation colorimetry data relevant to the evaluation target sample, and stores the data in the first to third storage units 26a to 26c, but is not limited thereto. For example, the colorimeter 2 may acquire colorimetry data relevant to an object color of each of the standard sample and the evaluation target sample, and may store the colorimetry data in the first to third storage units 26a to 26c. In addition, the colorimeter 2, for example, is capable of including a glossimeter measuring the gloss of the object, an illuminometer measuring the illuminance of the object, and the like.

Furthermore, it is obvious that the entire or a part of the configuration of each of one embodiment and various modification examples described above can be suitably combined within ranges which do not contradict each other.

### Reference Signs List

- 1: colorimetry system
- 2: colorimeter
- 4: external device
- 21: output unit
- 22: input unit
- 22a: power button
- 22b: colorimetry button
- 22c: standard button
- 22d: designation button
- 23: colorimetry unit
- 24: power unit
- 25: control unit
- 26a to 26c: first to third storage units
- 27, 44: communication unit
- 41: input unit
- 42: control unit
- 43: output unit
- 100: information processing system
- 271: mass storage device (MSD) control element
- 273: serial communication device (SCD) control element
- De1 to De3: first to third delete buttons

## Claims

1. A colorimeter (2) comprising:
(a) a colorimetry unit (23) that performs colorimetry processing with respect to a target;
(b) a first storage unit (26a) that stores data relevant to a colorimetry result of the colorimetry unit (23);
(c) a second storage unit (26b) that stores data relevant to a colorimetry result of the colorimetry unit (23);
(d) a control unit (25) that stores the same colorimetry data indicating a color of the target which is obtained by the colorimetry processing of the colorimetry unit (23), in each of the first storage unit (26a) and the second storage unit (26b), when the colorimetry processing is performed by the colorimetry unit (23); and
(e) a communication unit (27) that performs data communication with respect to an external device (4),
wherein the control unit (25) performs mirroring processing in which first data is stored in the second storage unit (26b) according to the presence of the first data which is stored in the first storage unit (26a) and is not stored in the second storage unit (26b), and second data is stored in the first storage unit (26a) according to the presence of the second data which is not stored in the first storage unit (26a) and is stored in the second storage unit (26b),
the communication unit (27) realizes each of data communication of a first method according to mass storage control and data communication of a second method according to serial communication control, with respect to the external device (4),
with respect to a request of deleting the data stored in the first storage unit (26a) from the external device (4) according to the data communication of the first method, a state in which data is not deleted from the first storage unit (26a) and the data stored in the first storage unit (26a) is maintained, and
with respect to a request of deleting the data stored in the first storage unit (26a) from the external device (4) according to the data communication of the second method, data is deleted from the first storage unit (26a) and a response indicating the effect is transmitted to the external device (4), wherein
the first data is data stored in the first storage unit (26a) and the second data is data stored in the second storage unit (26b), the first and second data comprising data relevant to a colorimetry result.

2. The colorimeter (2) according to claim 1,
wherein data is not written in the first storage unit (26a), with respect to a request of writing the data in the first storage unit (26a) from the external device (4) according to the data communication of the first method, and
data is written in the first storage unit (26a), with respect to a request of writing the data in the first storage unit (26a) from the external device (4) according to the data communication of the second method.

3. The colorimeter (2) according to claim 1 or 2, further comprising:
a display unit that visibly outputs information indicating the presence of the data stored in the first storage unit (26a); and
an input unit (41) that inputs a signal according to an operation of a user,
wherein a state in which data is not deleted from the first storage unit (26a) and the data stored in the first storage unit (26a) is maintained, with respect to a request of deleting the data stored in the first storage unit (26a), from the external device (4), according to the data communication of the first method, according to the signal input by the input unit (41).

4. An information processing system (100) comprising:
(A) a colorimeter (2); and
(B) an external device (4) connected to the colorimeter (2) such that data communication is capable of being performed,
wherein the colorimeter (2) includes
(A1) a colorimetry unit (23) that performs colorimetry processing with respect to a target,
(A2) a first storage unit (26a) that stores data relevant to a colorimetry result of the colorimetry unit (23),
(A3) a second storage unit (26b) that stores data relevant to a colorimetry result of the colorimetry unit (23),
(A4) a first control unit (25) that performs mirroring processing in which the same colorimetry data indicating a color of the target which is obtained by the colorimetry processing of the colorimetry unit (23) is stored in each of the first storage unit (26a) and the second storage unit (26b), when the colorimetry processing is performed by the colorimetry unit (23), first data is stored in the second storage unit (26b) according to the presence of the first data which is stored in the first storage unit (26a) and is not stored in the second storage unit (26b), and second data is stored in the first storage unit (26a) according to the presence of the second data which is not stored in the first storage unit (26a) and is stored in the second storage unit (26b), and
(A5) a first communication unit (27) that performs each of data communication of a first method according to mass storage control and data communication of a second method according to serial communication control, with respect to the external device (4),
the external device (4) includes
(B1) a second communication unit (44) that performs each of the data communication of the first method and the data communication of the second method, with respect to the colorimeter (2),
(B2) an input unit (22, 41) that inputs a signal according to an operation of a user, and
(B3) a second control unit (42) that visibly outputs information indicating a storage state of data in the first storage unit (26a), on a display unit by acquiring the information from the colorimeter (2) according to the data communication of the first method through the second communication unit (44),
with respect to a request of deleting the data stored in the first storage unit (26a) according to the data communication of the first method of the first and second communication units (27, 44), according to the signal which is input by the input unit (41) according to the operation of the user, a state in which data is not deleted from the first storage unit (26a) and the data stored in the first storage unit (26a) is maintained, and
with respect to a request of deleting the data stored in the first storage unit (26a) according to the data communication of the second method of the first and second communication units (27, 44), according to the signal which is input by the input unit (41) according to the operation of the user, data is deleted from the first storage unit (26a), and a response indicating the effect is transmitted to the external dev ice (4), wherein
the first data is data stored in the first storage unit (26a) and the second data is data stored in the second storage unit (26b), the first and second data comprising data relevant to a colorimetry result.

5. A data control method comprising:
(i) a step of allowing a colorimetry unit (23) included in a colorimeter (2) to perform colorimetry processing with respect to a target;
(ii) a step of allowing a control unit (25) included in the colorimeter (2) to store the same colorimetry data indicating a color of the target which is obtained by the colorimetry processing of the colorimetry unit (23), in each of a first storage unit (26a) and a second storage unit (26b) included in the colorimeter (2), when the colorimetry processing is performed by the colorimetry unit (23) in step (i);
(iii) a step of allowing the control unit (25) to perform mirroring processing in which first data is stored in the second storage unit (26b) according to the presence of the first data which is stored in the first storage unit (26a) and is not stored in the second storage unit (26b), and second data is stored in the first storage unit (26a) according to the presence of the second data which is not stored in the first storage unit (26a) and is stored in the second storage unit (26b);
(iv) a step of allowing the colorimeter (2) to, with respect to a request of deleting the data stored in the first storage unit (26a) from an external device (4) connected to the colorimeter (2) such that data communication is capable of being performed, according to data communication of a first method of mass storage control, maintain a state in which data is not deleted from the first storage unit (26a) and the data remains stored in the first storage unit (26a); and
(v) a step of allowing the colorimeter (2) to, with respect to a request of deleting the data stored in the first storage unit (26a) from the external device (4), according to data communication of a second method of serial communication control, delete data from the first storage unit (26a), wherein
the first data is data stored in the first storage unit (26a) and the second data is data stored in the second storage unit (26b), the first and second data comprising data relevant to a colorimetry result.

## Patentansprüche

1. Farbmesser (2), umfassend:
(a) eine Farbmessungseinheit (23), die Farbmessungsverarbeitung in Bezug auf ein Ziel durchführt;
(b) eine erste Speichereinheit (26a), die Daten speichert, die für ein Farbmessungsergebnis der Farbmessungseinheit (23) relevant sind;
(c) eine zweite Speichereinheit (26b), die Daten speichert, die für ein Farbmessungsergebnis der Farbmessungseinheit (23) relevant sind;
(d) eine Steuerungseinheit (25), die dieselben Farbmessungsdaten, die eine Farbe des Ziels anzeigen, die durch die Farbmessungsverarbeitung der Farbmessungseinheit (23) erhalten wird, in jeder von der ersten Speichereinheit (26a) und der zweiten Speichereinheit (26b) speichert, wenn die Farbmessungsverarbeitung durch die Farbmessungseinheit (23) durchgeführt wird; und
(e) eine Kommunikationseinheit (27), die Datenkommunikation in Bezug auf eine externe Vorrichtung (4) durchführt,
wobei die Steuerungseinheit (25) Spiegelungsverarbeitung durchführt, bei der erste Daten in der zweiten Speichereinheit (26b) entsprechend der Präsenz der ersten Daten, die in der ersten Speichereinheit (26a) gespeichert sind und nicht in der zweiten Speichereinheit (26b) gespeichert sind, gespeichert werden, und zweite Daten in der ersten Speichereinheit (26a) entsprechend der Präsenz der zweiten Daten, die nicht in der ersten Speichereinheit (26a) gespeichert sind und in der zweiten Speichereinheit (26b) gespeichert sind, gespeichert werden,
die Kommunikationseinheit (27) jede von Datenkommunikation eines ersten Verfahrens entsprechend einer Massenspeichersteuerung und Datenkommunikation eines zweiten Verfahrens entsprechend serieller Kommunikationssteuerung in Bezug auf die externe Vorrichtung (4) realisiert,
in Bezug auf eine Anfrage zum Löschen der in der ersten Speichereinheit (26a) gespeicherten Daten von der externen Vorrichtung (4) entsprechend der Datenkommunikation des ersten Verfahrens, einen Zustand, in dem Daten nicht aus der ersten Speichereinheit (26a) gelöscht werden und die in der ersten Speichereinheit (26a) gespeicherten Daten beibehalten werden, und
in Bezug auf eine Anfrage zum Löschen der in der ersten Speichereinheit (26a) gespeicherten Daten von der externen Vorrichtung (4) entsprechend der Datenkommunikation des zweiten Verfahrens, Daten aus der ersten Speichereinheit (26a) gelöscht werden und eine die Auswirkung anzeigende Antwort an die externe Vorrichtung (4) übertragen wird, wobei
die ersten Daten in der ersten Speichereinheit (26a) gespeicherte Daten sind und die zweiten Daten in der zweiten Speichereinheit (26b) gespeicherte Daten sind, und die ersten und zweiten Daten Daten umfassen, die für ein Farbmessungsergebnis relevant sind.

2. Farbmesser (2) nach Anspruch 1,
wobei Daten in Bezug auf eine Anfrage zum Schreiben der Daten in die erste Speichereinheit (26a) von der externen Vorrichtung (4) entsprechend der Datenkommunikation des ersten Verfahrens nicht in die erste Speichereinheit (26a) geschrieben werden, und
Daten in Bezug auf eine Anfrage zum Schreiben der Daten in die erste Speichereinheit (26a) von der externen Vorrichtung (4) entsprechend der Datenkommunikation des zweiten Verfahrens in die erste Speichereinheit (26a) geschrieben werden.

3. Farbmesser (2) nach Anspruch 1 oder 2, weiter umfassend:
eine Anzeigeeinheit, die sichtbar Informationen ausgibt, die die Präsenz der in der ersten Speichereinheit (26a) gespeicherten Daten anzeigt; und
eine Eingabeeinheit (41), die ein Signal entsprechend eines Betriebs eines Nutzers eingibt,
wobei ein Zustand, bei dem Daten in Bezug auf eine Anfrage zum Löschen der in der ersten Speichereinheit (26a) gespeicherten Daten von der externen Vorrichtung (4) entsprechend der Datenkommunikation des ersten Verfahrens, entsprechend der Signaleingabe durch die Eingabeeinheit (41) nicht aus der ersten Speichereinheit (26a) gelöscht werden und die in der ersten Speichereinheit (26a) gespeicherten Daten beibehalten werden.

4. Informationsverarbeitungssystem (100), umfassend:
(A) einen Farbmesser (2); und
(B) eine externe Vorrichtung (4), die mit dem Farbmesser (2) verbunden ist, sodass Datenkommunikation imstande ist, durchgeführt zu werden,
wobei der Farbmesser (2) beinhaltet
(A1) eine Farbmessungseinheit (23), die Farbmessungsverarbeitung in Bezug auf ein Ziel durchführt;
(A2) eine erste Speichereinheit (26a), die Daten speichert, die für ein Farbmessungsergebnis der Farbmessungseinheit (23) relevant sind;
(A3) eine zweite Speichereinheit (26b), die Daten speichert, die für ein Farbmessungsergebnis der Farbmessungseinheit (23) relevant sind;
(A4) eine erste Steuerungseinheit (25), die Spiegelungsverarbeitung durchführt, bei der dieselben Farbmessungsdaten, die eine Farbe des Ziels anzeigen, die durch die Farbmessungsverarbeitung der Farbmessungseinheit (23) erhalten wird, in jeder von der ersten Speichereinheit (26a) und der zweiten Speichereinheit (26b) gespeichert werden, wenn die Farbmessungsverarbeitung durch die Farbmessungseinheit (23) durchgeführt wird, erste Daten in der zweiten Speichereinheit (26b) entsprechend der Präsenz der ersten Daten, die in der ersten Speichereinheit (26a) gespeichert sind und nicht in der zweiten Speichereinheit (26b) gespeichert sind, gespeichert werden, und zweite Daten in der ersten Speichereinheit (26a) entsprechend der Präsenz der zweiten Daten, die nicht in der ersten Speichereinheit (26a) gespeichert sind und in der zweiten Speichereinheit (26b) gespeichert sind, gespeichert werden, und
(A5) eine erste Kommunikationseinheit (27), die jede von Datenkommunikation eines ersten Verfahrens entsprechend einer Massenspeichersteuerung, und Datenkommunikation eines zweiten Verfahrens entsprechend serieller Kommunikationssteuerung in Bezug auf die externe Vorrichtung (4) durchführt,
wobei die externe Vorrichtung (4) beinhaltet
(B1) eine zweite Kommunikationseinheit (44), die jede der Datenkommunikation des ersten Verfahrens und der Datenkommunikation des zweiten Verfahrens in Bezug auf den Farbmesser (2) durchführt,
(B2) eine Eingabeeinheit (22, 41), die ein Signal entsprechend eines Betriebs eines Nutzers eingibt, und
(B3) eine zweite Steuerungseinheit (42), die Informationen, die einen Speicherzustand von Daten in der ersten Speichereinheit (26a) anzeigen, durch Erfassen der Informationen aus dem Farbmesser (2) entsprechend der Datenkommunikation des ersten Verfahrens durch die zweite Kommunikationseinheit (44), sichtbar in einer Anzeigeeinheit ausgibt,
in Bezug auf eine Anfrage zum Löschen der in der ersten Speichereinheit (26a) gespeicherten Daten entsprechend der Datenkommunikation des ersten Verfahrens der ersten und zweiten Kommunikationseinheit (27, 44), entsprechend dem Signal, das von der Eingabeeinheit (41) entsprechend dem Betrieb des Nutzers eingegeben wird, einen Zustand, in dem Daten nicht aus der ersten Speichereinheit (26a) gelöscht werden und die in der ersten Speichereinheit (26a) gespeicherten Daten beibehalten werden, und
in Bezug auf eine Anfrage zum Löschen der in der ersten Speichereinheit (26a) gespeicherten Daten entsprechend der Datenkommunikation des zweiten Verfahrens der ersten und zweiten Kommunikationseinheit (27, 44), entsprechend dem Signal, das von der Eingabeeinheit (41) entsprechend dem Betrieb des Nutzers eingegeben wird, Daten aus der ersten Speichereinheit (26a) gelöscht werden und eine die Auswirkung anzeigende Antwort an die externe Vorrichtung (4) übertragen wird, wobei
die ersten Daten in der ersten Speichereinheit (26a) gespeicherte Daten sind und die zweiten Daten in der zweiten Speichereinheit (26b) gespeicherte Daten sind, die ersten und zweiten Daten Daten umfassen, die für ein Farbmessungsergebnis relevant sind.

5. Datensteuerungsverfahren, umfassend:
(i) einen Schritt des Erlaubens, dass eine Farbmessungseinheit (23), die in einem Farbmesser (2) beinhaltet ist, Farbmessungsverarbeitung in Bezug auf ein Ziel durchführt;
(ii) einen Schritt des Erlaubens, dass eine Speichereinheit (25), die in dem Farbmesser (2) beinhaltet ist, dieselben Farbmessungsdaten, die eine Farbe des Ziels anzeigen, die durch die Farbmessungsverarbeitung der Farbmessungseinheit (23) erhalten wird, in jeder von der ersten Speichereinheit (26a) und der zweiten Speichereinheit (26b), die in dem Farbmesser (2) beinhaltet sind, speichert, wenn die Farbmessungsverarbeitung durch die Farbmessungseinheit (23) in Schritt (i) durchgeführt wird;
(iii) einen Schritt des Erlaubens, dass die Speichereinheit (25) Spiegelungsverarbeitung durchführt, bei der erste Daten in der zweiten Speichereinheit (26b) entsprechend der Präsenz der ersten Daten, die in der ersten Speichereinheit (26a) gespeichert sind und nicht in der zweiten Speichereinheit (26b) gespeichert sind, gespeichert werden, und zweite Daten in der ersten Speichereinheit (26a) entsprechend der Präsenz der zweiten Daten, die nicht in der ersten Speichereinheit (26a) gespeichert sind und in der zweiten Speichereinheit (26b) gespeichert sind, gespeichert werden;
(iv) einen Schritt des Erlaubens, dass der Farbmesser (2) in Bezug auf eine Anfrage zum Löschen der in der ersten Speichereinheit (26a) gespeicherten Daten von einer externen Vorrichtung (4), die mit dem Farbmesser (2) verbunden ist, sodass Datenkommunikation imstande ist, durchgeführt zu werden, entsprechend Datenkommunikation eines ersten Verfahrens einer Massenspeichersteuerung, einen Zustand beibehält, in dem Daten nicht aus der ersten Speichereinheit (26a) gelöscht werden und die in der ersten Speichereinheit (26a) gespeicherten Daten gespeichert bleiben; und
(v) einen Schritt des Erlaubens, dass der Farbmesser (2) in Bezug auf eine Anfrage zum Löschen der in der ersten Speichereinheit (26a) gespeicherten Daten von einer externen Vorrichtung (4), entsprechend Datenkommunikation eines zweiten Verfahrens einer seriellen Kommunikationssteuerung Daten aus der ersten Speichereinheit (26a) löscht, wobei
die ersten Daten in der ersten Speichereinheit (26a) gespeicherte Daten sind und die zweiten Daten in der zweiten Speichereinheit (26b) gespeicherte Daten sind, und die ersten und zweiten Daten Daten umfassen, die für ein Farbmessungsergebnis relevant sind.

## Revendications

1. Colorimètre (2) comprenant :
(a) une unité colorimétrique (23) qui effectue un traitement colorimétrique par rapport à une cible ;
(b) une première unité de mémoire (26a) qui mémorise des données se rapportant à un résultat colorimétrique de l'unité colorimétrique (23) ;
(c) une seconde unité de mémoire (26b) qui mémorise des données se rapportant à un résultat colorimétrique de l'unité colorimétrique (23) ;
(d) une unité de commande (25) qui mémorise les mêmes données colorimétriques indiquant une couleur de la cible qui sont obtenues par le traitement colorimétrique de l'unité colorimétrique (23), dans chacune de la première unité de mémoire (26a) et de la seconde unité de mémoire (26b), lorsque le traitement colorimétrique est effectué par l'unité colorimétrique (23) ; et
(e) une unité de communication (27) qui effectue une communication des données par rapport à un dispositif externe (4),
dans lequel l'unité de commande (25) effectue un traitement en miroir dans lequel des premières données sont mémorisées dans la seconde unité de mémoire (26b) en fonction de la présence des premières données qui sont mémorisées dans la première unité de mémoire (26a) et qui ne sont pas mémorisées dans la seconde unité de mémoire (26b), et des secondes données sont mémorisées dans la première unité de mémoire (26a) en fonction de la présence des secondes données qui ne sont pas mémorisées dans la première unité de mémoire (26a) et qui sont mémorisées dans la seconde unité de mémoire (26b),
l'unité de communication (27) réalise chacune parmi la communication de données d'un premier procédé en fonction d'une commande de mémoire de masse et la communication de données d'un second procédé en fonction d'une commande de communication sérielle, par rapport au dispositif externe (4),
par rapport à une demande de suppression des données mémorisées dans la première unité de mémoire (26a) du dispositif externe (4) en fonction de la communication de données du premier procédé, un état dans lequel des données ne sont pas supprimées de la première unité de mémoire (26a) et les données mémorisées dans la première unité de mémoire (26a) sont conservées, et
par rapport à une demande de suppression des données mémorisées dans la première unité de mémoire (26a) du dispositif externe (4) en fonction de la communication de données du second procédé, des données sont supprimées de la première unité de mémoire (26a) et une réponse indiquant l'effet est transmise au dispositif externe (4), dans lequel
les premières données sont des données mémorisées dans la première unité de mémoire (26a) et les secondes données sont des données mémorisées dans la seconde unité de mémoire (26b), les premières et secondes données comprenant des données se rapportant à un résultat colorimétrique.

2. Colorimètre (2) selon la revendication 1,
dans lequel des données ne sont pas inscrites dans la première unité de mémoire (26a), par rapport à une demande d'inscription des données dans la première unité de mémoire (26a) du dispositif externe (4) en fonction de la communication de données du premier procédé, et
des données sont inscrites dans la première unité de mémoire (26a), par rapport à une demande d'inscription des données dans la première unité de mémoire (26a) du dispositif externe (4) en fonction de la communication de données du second procédé.

3. Colorimètre (2) selon la revendication 1 ou 2, comprenant en outre :
une unité d'affichage qui émet visiblement des informations indiquant la présence des données mémorisées dans la première unité de mémoire (26a) ; et
une unité d'entrée (41) qui entre un signal en fonction d'une opération d'un utilisateur,
dans lequel un état dans lequel des données ne sont pas supprimées de la première unité de mémoire (26a) et des données mémorisées dans la première unité de mémoire (26a) est conservé, par rapport à une demande de suppression des données mémorisées dans la première unité de mémoire (26a), du dispositif externe (4), en fonction de la communication de données du premier procédé, en fonction de l'entrée de signal par l'unité d'entrée (41).

4. Système de traitement d'informations (100) comprenant :
(A) un colorimètre (2) ; et
(B) un dispositif externe (4) raccordé au colorimètre (2) de telle sorte que la communication de données puisse être effectuée,
dans lequel le colorimètre (2) inclut
(A1) une unité colorimétrique (23) qui effectue un traitement colorimétrique par rapport à une cible ;
(A2) une première unité de mémoire (26a) qui mémorise des données se rapportant à un résultat colorimétrique de l'unité colorimétrique (23) ;
(A3) une seconde unité de mémoire (26b) qui mémorise des données se rapportant à un résultat colorimétrique de l'unité colorimétrique (23) ;
(A4) une première unité de commande (25) qui effectue un traitement en miroir dans lequel les mêmes données colorimétriques indiquant une couleur de la cible qui sont obtenues par le traitement colorimétrique de l'unité colorimétrique (23) sont mémorisées dans chacune parmi la première unité de mémoire (26a) et la seconde unité de mémoire (26b), lorsque le traitement colorimétrique est effectué par l'unité colorimétrique (23), des premières données sont mémorisées dans la seconde unité de mémoire (26b) en fonction de la présence des premières données qui sont mémorisées dans la première unité de mémoire (26a) et qui ne sont pas mémorisées dans la seconde unité de mémoire (26b), et des secondes données sont mémorisées dans la première unité de mémoire (26a) en fonction de la présence des secondes données qui ne sont pas mémorisées dans la première unité de mémoire (26a) et qui sont mémorisées dans la seconde unité de mémoire (26b), et
(A5) une première unité de communication (27) qui effectue chacune parmi la communication de données d'un premier procédé en fonction d'une commande de mémoire de masse et la communication de données d'un second procédé en fonction d'une commande de communication sérielle, par rapport au dispositif externe (4),
le dispositif externe (4) inclut
(B1) une seconde unité de communication (44) qui effectue chacune parmi la communication de données du premier procédé et la communication de données du second procédé, par rapport au colorimètre (2),
(B2) une unité d'entrée (22, 41) qui entre un signal en fonction d'une opération d'un utilisateur, et
(B3) une seconde unité de commande (42) qui émet visiblement des informations indiquant un état de mémorisation des données dans la première unité de mémoire (26a), sur une unité d'affichage par l'acquisition des informations du colorimètre (2) en fonction de la communication de données du premier procédé par le biais de la seconde unité de communication (44),
par rapport à une demande de suppression des données mémorisées dans la première unité de mémoire (26a) en fonction de la communication de données du premier procédé des première et seconde unités de communication (27, 44), en fonction du signal qui est entré par l'unité d'entrée (41) en fonction de l'opération de l'utilisateur, un état dans lequel des données ne sont pas supprimées de la première unité de mémoire (26a) et les données mémorisées dans la première unité de mémoire (26a) sont conservées, et
par rapport à une demande de suppression des données mémorisées dans la première unité de mémoire (26a) en fonction de la communication de données du second procédé des première et seconde unités de communication (27, 44), en fonction du signal qui est entré par l'unité d'entrée (41) en fonction de l'opération de l'utilisateur, des données sont supprimées de la première unité de mémoire (26a) et une réponse indiquant l'effet est transmise au dispositif externe (4), dans lequel
les premières données sont des données mémorisées dans la première unité de mémoire (26a) et les secondes données sont des données mémorisées dans la seconde unité de mémoire (26b), les premières et secondes données comprenant des données se rapportant à un résultat colorimétrique.

5. Procédé de commande de données comprenant :
(i) une étape permettant à une unité colorimétrique (23) incluse dans un colorimètre (2) d'effectuer un traitement colorimétrique par rapport à une cible ;
(ii) une étape permettant à une unité de commande (25) incluse dans le colorimètre (2) de mémoriser les mêmes données colorimétriques indiquant une couleur de la cible qui sont obtenues par le traitement colorimétrique de l'unité colorimétrique (23), dans chacune parmi une première unité de mémoire (26a) et une seconde unité de mémoire (26b) incluses dans le colorimètre (2) lorsque le traitement colorimétrique est effectué par l'unité colorimétrique (23) à l'étape (i) ;
(iii) une étape permettant à l'unité de commande (25) d'effectuer un traitement en miroir dans lequel des premières données sont mémorisées dans la seconde unité de mémoire (26b) en fonction de la présence des premières données qui sont mémorisées dans la première unité de mémoire (26a) et qui ne sont pas mémorisées dans la seconde unité de mémoire (26b), et des secondes données sont mémorisées dans la première unité de mémoire (26a) en fonction de la présence des secondes données qui ne sont pas mémorisées dans la première unité de mémoire (26a) et qui sont mémorisées dans la seconde unité de mémoire (26b) ;
(iv) une étape permettant au colorimètre (2), par rapport à une demande de suppression des données mémorisées dans la première unité de mémoire (26a) d'un dispositif externe (4) raccordé au colorimètre (2) de telle sorte que la communication de données puisse être effectuée, en fonction de la communication de données d'un premier procédé de commande de mémoire de masse, de conserver un état dans lequel des données ne sont pas supprimées de la première unité de mémoire (26a) et les données restent mémorisées dans la première unité de mémoire (26a) ; et
(v) une étape permettant au colorimètre (2), par rapport à une demande de suppression des données mémorisées dans la première unité de mémoire (26a) du dispositif externe (4), en fonction de la communication de données d'un second procédé de commande de communication sérielle, de supprimer des données de la première unité de mémoire (26a), dans lequel
les premières données sont des données mémorisées dans la première unité de mémoire (26a) et les secondes données sont des données mémorisées dans la seconde unité de mémoire (26b), les premières et secondes données comprenant des données se rapportant à un résultat colorimétrique.
